# EUROPEAN PATENT SPECIFICATION

(11) **EP 1 678 427 B1**
(45) Date of publication and mention of the grant of the patent: **26.06.2013**
(21) Application number: 04790321.6
(22) Date of filing: 11.10.2004
(51) Int. Cl.: F16C 33/66, F16N 7/30, F16C 13/02, F16C 33/76, B21B 31/07

(54) **METHOD AND APPARATUS FOR LUBRICATING A SEALED BEARING ASSEMBLY BY SUPPLYING GREASE AND GAS THROUGH SEPARATE SUPPLY LINES**
VERFAHREN UND VORRICHTUNG ZUR SCHMIERUNG EINER ABGEDICHTETEN LAGERANORDNUNG MITTELS ZUFUHR VON SCHMIERFETT UND GAS DURCH GETRENNTE LEITUNGEN
PROCÉDÉ ET DISPOSITIF DE GRAISSAGE D'UN ENSEMBLE PALIER AVEC ALIMENTATION DE GRAISSE ET D'AIR AVEC CONDUITES DISTINCTES

(30) Priority: 09.10.2003 EP 03256435
(43) Date of publication of application: 12.07.2006
(73) Proprietor: Tata Steel UK Limited, London SW1P 4WY (GB)
(72) Inventor: PRESHAW, David Alan, Workington, Cumbria CA14 3HT (GB)
(74) Representative: Blauw, Frans Gerard
(86) International application number: PCT/EP2004/011440
(87) International publication number: WO 2005/038332

(56) References cited:
- DE-A1- 19 750 205
- GB-A- 1 436 282
- US-A- 1 957 054
- US-A- 2 125 446
- US-A- 3 042 462
- US-A- 3 893 674
- US-A- 3 903 992
- US-A- 5 484 212
- US-A- 5 915 844
- US-A- 6 065 689
- PATENT ABSTRACTS OF JAPAN vol. 017, no. 686 (M-1529), 15 December 1993 (1993-12-15) -& JP 05 231422 A (MUTSUBISHI RUBBER KK), 7 September 1993 (1993-09-07)
- PATENT ABSTRACTS OF JAPAN vol. 2000, no. 06, 22 September 2000 (2000-09-22) & JP 2000 065071 A (KAWASAKI STEEL CORP), 3 March 2000 (2000-03-03)

## Description

This invention relates to a method of lubricating a bearing assembly and a method of preventing the ingress of contaminants into the bearing assembly. The invention also relates to an apparatus for performing the method of the invention.

Bearing assemblies are used in a very wide range of applications. Lubrication of a bearing assembly is essential. It is also important to maintain the integrity of a bearing assembly by avoiding the ingress of foreign matter or contaminants into the bearing assembly and causing damage which causes delays and extra costs. This is particularly important in heavy industrial works such as steel mills where contaminants such as water, other fluids, metal particles, finely divided powders, acids etc may be present in the surroundings of the bearing assembly. The maintenance of bearing integrity against the ingress of undesirable foreign matter or contaminants is also important in applications such as processing lines, e.g. for food, where there is a risk of the food entering the bearing assembly. The use of seals such as for example mechanical seals is well known but such seals often do not sufficiently prevent the ingress of contaminants, particularly once they have worn in.

It is known in the art to achieve lubrication of a bearing assembly by pumping a continuous through-flow of grease through the bearing assembly. For example, in continuous casting equipment grease is usually fed into a bearing cavity of the bearing assembly via the bearing housing. Typically 1.5 to 3 cc of grease is fed in per pump cycle with one pump cycle occurring every 10 to 20 minutes. The grease exits the bearing assembly via seals between the bearing housing and the rotating shaft or via exit holes in the bearing housing or seal carriers. The grease outflow from the bearing helps to prevent the ingress of contaminants.

It is also known to lubricate a bearing by using a flow of compressed air to carry oil into the bearing assembly. In such a known system oil is released at a desired rate into a stream of compressed air. The compressed air transports the oil to the bearing via oil-air pipes. Inside the oil-air pipes, under the influence of the compressed air, a continuous oil film is gradually formed from the released oil. This film moves in streaks along the inside of the oil-air pipe to the point of friction or seal in the bearing assembly. There, the oil is detached from the pipe inner wall by the air stream. The friction points of the bearing assembly are lubricated, cooled by the compressed air and at the same time, ingress of contaminants into the bearing assembly is prevented by the positive pressurisation of the bearing assembly.

Both of these prior art methods have disadvantages. The conventional grease lubricating method uses large amounts of grease, which is costly and creates undesirable environmental hazards and disposal requirements. The grease within, for example, continuous casting installations is usually deposited in the settlement basins of the open cooling water system. Much of the grease combines with mill scale and general sludge and has to be disposed of in landfill sites. Some of the grease ends up in the cooling system where it can trap dirt and cause unwanted blockages especially of spray nozzles and heat shields.

The conventional method using oil and air requires a complex system of oil air pipes and complex apparatus for metering and distributing the oil and air. Large volumes of compressed air are also required to distribute the oil.

In document US 5 484 212 A there is disclosed a roller bearing assembly for a printing cylinder and a method of lubricating the assembly. The outer side of the bearing assembly is sealed by a cover plate and the side directed to the cylinder is provided with a slinger and and a cylindrical grease collecting shield. A grease passage extends through a housing member supporting the bearing and an air supply nozzle extends through an opening in the cover plate. In the method of lubricating grease is supplied into the bearing until a full load of grease is provided in the space between the races. After completion of filling grease into the bearing an air pressure system is actuated to direct pressurized air through the nozzle into the bearing assembly to remove a portion of the grease out of the bearing assembly and to spread the remainder of the grease as coatings on the rolling surfaces in the roller bearing. These lubricating steps are repeated periodically during printing operation to replenish the grease coatings.

It is an object of the invention to provide an improved method of lubricating a bearing assembly and preventing the ingress of contaminants into the bearing assembly.

It is a further object of the invention to provide a lower cost method of lubricating a bearing assembly and preventing the ingress of contaminants into the bearing assembly.

It is a further object of the invention to provide a method of lubricating a bearing assembly and preventing the ingress of contaminants into the bearing assembly that can be retrofitted to an existing bearing assembly.

According to the invention there is provided a method of lubricating a bearing assembly and preventing the ingress of contaminants into the bearing assembly for a rotatable element as defined in independent claim 1, an apparatus for performing the method as defined in claim 10 and a use of the method as defined in claim 12.

By using a combination of gas and grease the method of the invention results in a significantly lower consumption of grease in comparison with a conventional grease lubricating method. Sufficient grease to lubricate the bearing assembly is supplied but it is not the grease discharge alone that is required to prevent the ingress of contaminants as the gas supplied is discharged along with the grease and the combined discharge of gas and grease from the bearing assembly helps prevent the ingress of contaminants. The consumption of gas is also significantly reduced in comparison with a conventional oil and air method, as the gas is supplied to the bearing assembly through a gas supply line which is separate from the grease supply line. The gas supplied to the bearing assembly does not need to be highly compressed to ensure a sufficient flow of lubricant into the bearing as is the case with the known oil/air system. The separate supply lines also ensure that no grease is fed back into the gas supply line. The outflow of grease and gas in the present invention helps prevent the ingress of contaminants whilst the bearing assembly is only slightly over-pressurised. In the present invention the majority of the grease and gas supplied to the bearing assembly is transported through and discharged from the assembly.

During operation a load is carried by the supporting portion of the rotatable element. In general, the processing of the load on the rotatable element will produce contaminants which tend to ingress into the bearing assembly. Therefore, the bearing assembly is provided with a sealing arrangement arranged so as to prevent the ingress of contaminants i.e. directed to the side from which contaminants would penetrate the bearing assembly. This can be achieved when the sealing arrangement is positioned in a part of the bearing assembly directed to the supporting portion of the rotatable element. Preferably, the sealing arrangement allows gas and/or grease to leave the bearing assembly at the side of the bearing assembly at which contaminants tend to penetrate the bearing assembly.

In a new bearing assembly the sealing arrangement will have a great contribution to the prevention of the ingress of contaminants. With increasing wear of the sealing arrangement, the effect of gas and grease being transported through the bearing assembly and preventing ingress of contaminants, will also increase.

The method of the invention has demonstrated to be very effective in increasing the lifetime of a bearing assembly. The supply of grease also serves to replenish grease which is broken down during the increased lifetime by fresh grease thereby further increasing the lifetime of the bearing assembly.

Preferably the sealing arrangement directed to the supporting portion of the rotatable element comprises an elastomeric seal and a mechanical seal. The elastomeric seal has good sealing properties but is sensitive to contamination and mechanical damage. The mechanical seal is more robust and less sensitive to mechanical damage or wear. The combination of both seals provides a robust seal with high sealing properties.

Preferably the mechanical seal comprises a labyrinth type of seal. This type of seal creates a long distance for the contaminants to cover before reaching the inside of the bearing assembly while at the same time creating a low resistance path for gas passing through the bearing assembly

The grease used in the present invention is preferably within the range of a medium soft to a semi fluid grease. The grease used in the present invention preferably has a penetration in the range from 475 to 220 when measured in accordance with ASTM 217-IP 50 to give good lubrication performance and adequate flow through the bearing assembly. Penetration is a non dimensional value obtained by measuring, in tenths of a millimetre, the depth to which a standard cone sinks into the grease in five seconds at a temperature of 25°C (ASTM 217-IP 50). The grease preferably has a penetration number between 000 and 3. The penetration number is in accordance with the classification used by the National Lubricating Grease Institute (NLGI) at date of filing.

The gas is preferably dried before being supplied to the bearing assembly to avoid water entering the bearing and causing it to corrode and fail. The gas used is preferably air in order to keep costs down or any inert gas such as nitrogen in order to reduce the risk of detrimental reactions occurring in the bearing assembly. If a compressed air system is already present it can be used to supply gas. Such a compressed air system should preferably be fitted with gas-drying means and means for reducing the pressure before the gas is fed into the bearing assemblies, via a suitable pipe system. The gas is preferably supplied via discrete feeds which each service a group of bearing assemblies e.g. a group numbering ten.

The gas flow rate to the bearing assembly or multiple bearing assemblies is preferably monitored. A detected reduction in the gas flow provides a means of alerting operators to malfunctions in the bearing due to e.g. contaminants causing a blockage or damaged feed pipes restricting the gas flow. Preferably calorimetric flow meters are used for accuracy. Each feed preferably has a calorimetric flow meter monitoring the gas. The moisture content and/or pressure of the gas supplied to the bearing assembly may also be monitored by means of appropriate instrumentation (e.g. pressure transmitter, flow meter and hygrometer).

The method of the present invention is preferably used for a bearing assembly comprising roller elements e.g. plain rollers, spherical rollers, barrel rollers or balls, as such bearing assemblies are particularly vulnerable to failure if not sufficiently lubricated and/or if penetrated by contaminants.

The method of the present invention is particularly suitable for use with bearing assemblies comprising deep groove ball bearings, self aligning ball bearings, angular contact ball bearings, cylindrical roller bearings, needle roller bearings, spherical roller bearings, taper roller bearings, thrust ball bearings, cylindrical roller thrust bearings, needle roller thrust bearings, spherical roller thrust bearings or Y bearing units.

The method of the present invention is particularly useful in metal production and/or metal processing machinery and in particular in steel mill applications. The method of the present invention is particularly suitable for use in steel mill applications such as transfer roller tables and continuous casters where contaminants such as water and mill scale are often present in the surroundings of the bearing elements and where failure of a bearing is potentially dangerous as well as causing costly delays. Within a continuous caster the method is preferably used within the main strand containment machinery and the downstream discharge roller tables.

The grease and gas flow through the bearing assembly thereby provides lubrication before discharging from the bearing assembly via the at least one outlet where the combined discharge of the gas and grease prevent the ingress of contaminants without the bearing assembly needing to be highly over-pressurised. The outlet for the grease and gas is through seals in the bearing assembly and may be through outlet holes in the bearing assembly. The outlet or bypass holes ensure sufficient gas and grease can flow out of the bearing assembly particularly before the seals have worn in and are passing sufficient grease and gas.

The invention will now be illustrated by means of a non-limitative example.

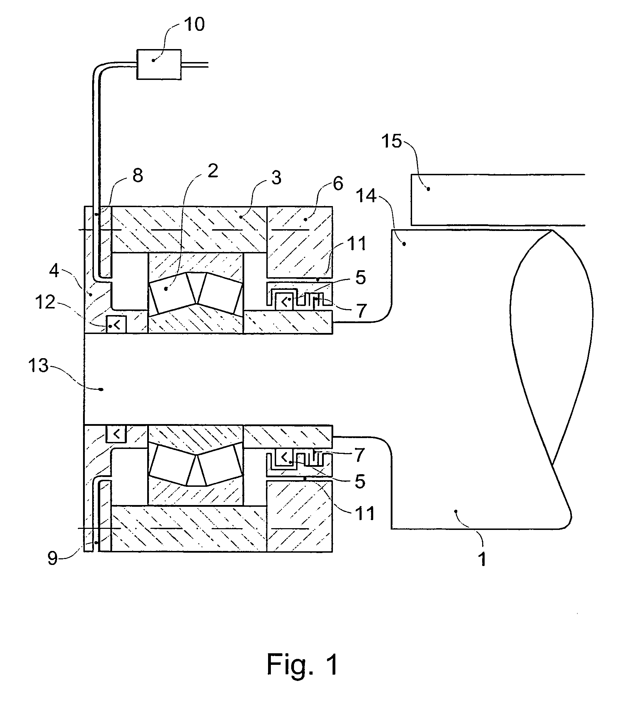

Figure 1 illustrates part of a roller bearing assembly from a transport roller in a continuous caster for steel.

A transport roller 1 is supported by roller elements 2 within a bearing housing 3. The transport roller comprises a shaft portion 13 and a supporting portion 14, carrying a load, in the example a cast steel slab 15. The side of the bearing housing closest to the transport roller 1, is the inner side of the bearing and the side of the bearing furthest from the transport roller 1 is the outer side. The bearing housing outer end cap 4 contains an elastomeric seal 12 which is oriented to prevent loss of grease and gas past the outer end cap thereby forcing it to exit the bearing housing on the roller or inner side of the bearing housing. The bearing housing inner end cap or inner end seal carrier 6 contains a sealing arrangement 5,7 directed to the supporting portion. The sealing arrangement comprises a mechanical seal 7, comprising a labyrinth type seal, and an elastomeric seal 5. The mechanical seal 7 in the inner seal carrier provides less effective sealing than the elastomeric seal 5 but is more resistant to, for example, abrasive particles. The bearing housing inner end cap may only contain an elastomeric seal. Grease and gas discharge from the bearing housing is via small bypass holes 11 drilled in the inner end cap 6 and via the elastomeric and mechanical seals 5, 7, which are not wholly gas and/or grease tight. The bypass holes ensure sufficient gas and grease can flow out of the bearing assembly particularly before the seals have worn in and are passing sufficient grease and gas. They also allow a flow of gas when the seals are new providing proof that the supply of gas is working.

The outer end cap 4 of the bearing assembly is provided with a gas supply inlet 8 and a grease supply inlet 9. The grease can be supplied by existing or new feeding systems. An existing compressed air system can be used to supply gas. The gas is dried and set to an appropriate pressure before being supplied to the bearing assembly. The gas used is preferably air or an inert gas such as nitrogen. The gas is preferably supplied via discrete feeds which each service a group of bearing assemblies e.g. a group numbering ten. The gas and grease supply inlets are shown in figure 1 positioned at 180° to each other in the outer end cap 4, but they may be positioned at different orientations to each other in the outer end cap. The grease may be supplied to the bearing housing on the same side of the bearing as the gas or may be supplied to the bearing housing on the opposite side of the bearing to the gas feed (e.g. the gas may be supplied to the inner side of the bearing housing and the grease to the outer side). The gas and/or the grease supply inlet may run through the bearing house 3 and supply gas and/or grease from the bearing house 3 to the roller elements in the bearing assembly. The control system 10 monitors the humidity, pressure and flow rate of the gas and contains an alarm system.

During operation the internal bearing assembly condition is such that it contains a slightly higher pressure than that outside of the bearing and this is monitored by means of an gas flow meter present e.g. within the monitoring system 10. A reduction in the gas flow through the bearing will set off the alarm system within the control system 10 to alert the plant operators to a malfunction. The pressure in the bearing assembly is preferably 0.1 to 0.85 kg/cm²_{.}

The method and apparatus of the present invention has been shown in experiments to have a grease consumption ten times smaller, and possibly lower, than the grease consumption of the known grease lubricating system whilst also having a gas flow rate ten times smaller, and possibly lower, than that of a conventional oil and air system.

## Claims

1. Method of lubricating a bearing assembly for a rotatable element (1) and preventing the ingress of contaminants into the bearing assembly, the rotatable element (1) comprising a supporting portion (14) for supporting a load and a shaft portion (13) extending into the bearing assembly,
wherein pressurized gas is supplied to the bearing assembly through a gas supply line (8) and grease is supplied to the bearing assembly through a grease supply line (9), the gas and grease supply lines (8, 9) being separate supply lines,
the supplied grease and gas are transported through and discharged from the bearing assembly,
wherein the bearing assembly comprises sealing arrangements (12; 5, 7) at both sides of the bearing assembly, the sealing arrangement (5, 7) directed to the supporting portion (14) of the rotatable element (1) allowing the discharge of gas and/or grease,
and wherein the pressure within the bearing assembly is kep slightly higher than the pressure outside the bearing assembly.

2. Method according to claim 1 wherein the sealing arrangement (5, 7) directed to the supporting portion (14) of the rotatable element (1) comprises an elastomeric seal (5) and a mechanical seal (7).

3. Method according to claim 2, wherein the mechanical seal (7) comprises a labyrinth type of seal.

4. Method according to any of the preceding claims, wherein the grease is within the range of a medium soft to a semi fluid grease.

5. Method according to claim 4, wherein the grease has a penetration in the range from 475 to 220.

6. Method according to any preceding claim, wherein the gas flow to the bearing assembly is monitored.

7. Method according to any preceding claim wherein the gas is dried before being supplied to the bearing assembly.

8. Method according to any preceding claim wherein the gas is air or any inert gas.

9. Method according to any preceding claim, wherein the bearing assembly comprises roller elements.

10. Apparatus for performing the method according to any preceding claim comprising a bearing assembly wherein the bearing assembly comprises a bearing housing (3), at least one bearing (2), an inlet (8) for supplying pressurized gas, and an inlet for supplying grease (9), the apparatus further comprising a supply for pressurized gas and a supply for grease, sealing arrangements (12; 5, 7) at both sides of the bearing assembly, at least one outlet for discharging grease and gas, and means (10) to monitor and control the gas supply and gas pressure in the bearing assembly, in order to keep the pressure in the bearing assembly higher than the outside pressure, wherein the sealing arrangement (5,7) directed to the supporting portion (14) of the rotatable member (1) constitutes an outlet for discharging grease and gas.

11. Apparatus according to claim 10, wherein at least one bypass hole (11) is provided for discharging grease and gas.

12. Use of the method of any one of claims 1 to 9 in metal production and/or metal processing machinery.

## Patentansprüche

1. Verfahren zum Schmieren einer Lagerbaugruppe für ein drehbares Element (1) und Verhindern des Eintritts von Schmutzstoffen in die Lagerbaugruppe, das drehbare Element (1) umfassend einen Stützabschnitt (14) zum Stützen einer Last und einen Schaftabschnitt (13), der sich in die Lagerbaugruppe erstreckt,
wobei der Lagerbaugruppe Druckgas über eine Gaszufuhrleitung (8) zugeführt wird und der Lagerbaugruppe Schmierfett über eine Schmierfettleitung (9) zugeführt wird, wobei die Gas - und Schmierfettzufuhrleitungen (8, 9) getrennte Leitungen sind,
wobei das zugeführte Schmierfett und Gas durch die Lagerbaugruppe befördert und daraus abgelassen werden,
wobei die Lagerbaugruppe Dichtungsanordnungen (12; 5, 7) auf beiden Seiten der Lagerbaugruppe umfasst, wobei die Dichtungsanordnungen (5, 7) zum Stützabschnitt (14) des drehbaren Elements (1) gerichtet sind und das Ablassen von Gas und/oder Schmierfett ermöglichen,
und wobei der Druck innerhalb der Lagerbaugruppe geringfügig höher als der Druck außerhalb der Lagerbaugruppe gehalten wird.

2. Verfahren nach Anspruch 1, wobei die Dichtungsanordnung (5, 7), die zum Stützabschnitt (14) des drehbaren Elements (1) gerichtet ist, eine Elastomerdichtung (5) und eine mechanische Dichtung (7) umfasst.

3. Verfahren nach Anspruch 2, wobei die mechanische Dichtung (7) eine labyrinthartige Dichtung umfasst.

4. Verfahren nach einem der vorhergehenden Ansprüche, wobei das Schmierfett im Bereich eines mittelweichen bis halbflüssigen Schmierfetts liegt.

5. Verfahren nach Anspruch 4, wobei das Schmierfett eine Durchdringung im Bereich von 475 bis 220 aufweist.

6. Verfahren nach einem der vorhergehenden Ansprüche, wobei der Gasstrom zur Lagerbaugruppe überwacht wird.

7. Verfahren nach einem der vorhergehenden Ansprüche, wobei das Gas vor dem Zuführen zur Lagebaugruppe getrocknet wird.

8. Verfahren nach einem der vorhergehenden Ansprüche, wobei das Gas Luft oder jegliches Inertgas ist.

9. Verfahren nach einem der vorhergehenden Ansprüche, wobei die Lagerbaugruppe Walzenelemente umfasst.

10. Vorrichtung zum Ausführen des verfahrens gemäß einem der vorhergehenden Ansprüche, umfassend eine Lagerbaugruppe, wobei die Lagerbaugruppe ein Lagergehäuse (3), zumindest ein Lager (2), einen Einlass (8) zum Zuführen von Druckgas und einen Einlass (9) zum Zuführen von Schmierfett umfasst, die Vorrichtung ferner umfassend eine Zufuhr für Druckgas und eine Zufuhr für Schmierfett, Dichtungsanordnungen (12; 5, 7) auf beiden Seiten der Lagerbaugruppe, zumindest einen Auslass zum Ablassen von Schmierfett und Gas und Mittel (10) zum Überwachen und Regeln der Gaszufuhr und des Gasdrucks in der Lagerbaugruppe, um den Druck in der Lagerbaugruppe höher als den Außendruck zu halten, wobei die Dichtungsanordnung (5, 7), die zum Stützabschnitt (14) des drehbaren Glieds (1) gerichtet ist, einen Auslass zum Ablassen von Schmierfett und Gas bildet.

11. Vorrichtung nach Anspruch 10, wobei zumindest ein Umleitungsloch (11) zum Ablassen von Schmierfett und Gas vorgesehen ist.

12. Anwendung des Verfahrens nach einem der Ansprüche 1 bis 9 in Metallproduktions- und/oder Metallverarbeitungsmaschinenanlagen.

## Revendications

1. Procédé pour lubrifier un ensemble de palier destiné à un élément rotatif (1) et pour empêcher l'infiltration de contaminants dans l'ensemble de palier, l'élément rotatif (1) comprenant une partie de support (14) pour supporter une charge et une partie d'arbre (13) s'étendant dans l'ensemble de palier,
dans lequel un gaz comprimé est alimenté vers l'ensemble de palier par une conduite d'alimentation en gaz (8), tandis qu'une graisse est alimentée vers l'ensemble de palier par une conduite d'alimentation en graisse (9), les conduites d'alimentation en gaz et en graisse (8, 9) étant des conduites d'alimentation séparées,
le gaz et la graisse alimentés sont transportés et évacués de l'ensemble de palier,
dans lequel l'ensemble de palier comprend des dispositifs d'étanchéité (12 ; 5, 7) des deux côtés de l'ensemble de palier, le dispositif d'étanchéité (5, 7) orienté vers la partie de support (14) de l'élément rotatif (1) permettant d'évacuer le gaz et/ou la graisse,
et dans lequel la pression à l'intérieur de l'ensemble de palier est maintenue légèrement supérieure à la pression à l'extérieur de l'ensemble de palier.

2. Procédé selon la revendication 1, dans lequel le dispositif d'étanchéité (5, 7) orienté vers la partie de support (14) de l'élément rotatif (1) comprend un joint élastomère (5) et un joint mécanique (7).

3. Procédé selon la revendication 2, dans lequel le joint mécanique (7) comprend un joint du type labyrinthe.

4. Procédé selon l'une quelconque des revendications précédentes, dans lequel la graisse varie de moyennement tendre à semi-liquide.

5. Procédé selon la revendication 4, dans lequel la graisse présente un degré de pénétration de 475 à 220.

6. Procédé selon l'une quelconque des revendications précédentes, dans lequel le flux de gaz vers l'ensemble de palier est surveillé.

7. Procédé selon l'une quelconque des revendications précédentes, dans lequel le gaz est séché avant d'être alimenté vers l'ensemble de palier.

8. Procédé selon l'une quelconque des revendications précédentes, dans lequel le gaz est de l'air ou n'importe quel gaz inerte.

9. Procédé selon l'une quelconque des revendications précédentes, dans lequel l'ensemble de palier comprend des éléments de roulement.

10. Dispositif permettant d'exécuter le procédé selon l'une quelconque des revendications précédentes, comprenant un ensemble de palier, dans lequel l'ensemble de palier comprend un logement de palier (3), au moins un palier (2), une entrée (8) pour alimenter du gaz comprimé et une entrée pour alimenter de la graisse (9), le dispositif comprenant en outre une conduite d'alimentation pour le gaz et une conduite d'alimentation pour la graisse, ainsi que des dispositifs d'étanchéité (12 ; 5, 7) des deux côtés de l'ensemble de palier, au moins une sortie pour évacuer la graisse et le gaz, et un moyen (10) pour surveiller et contrôler l'alimentation en gaz et la pression du gaz dans l'ensemble de palier, afin de maintenir la pression dans l'ensemble de palier supérieure à la pression extérieure, dans lequel le dispositif d'étanchéité (5, 7) orienté vers la partie de support (14) de l'élément rotatif (1) constitue une sortie pour l'évacuation de la graisse et du gaz.

11. Dispositif selon la revendication 10, dans lequel il est prévu au moins un trou de dérivation (11) pour l'évacuation de la graisse et du gaz.

12. Utilisation du procédé selon l'une quelconque des revendications 1 à 9 dans la production de métal et/ou dans la machinerie de production de métal.
